# EUROPÄISCHE PATENTSCHRIFT

(11) **EP 3 166 818 B1**
(45) Veröffentlichungstag und Bekanntmachung des Hinweises auf die Patenterteilung: **08.01.2020**
(21) Anmeldenummer: 15734473.0
(22) Anmeldetag: 30.06.2015
(51) Int. Cl.: B60Q 1/26, B60R 1/12, B60Q 1/34, G02B 6/00, F21S 43/237, F21S 43/239, F21S 43/243, F21S 43/245

(54) **FAHRTRICHTUNGSANZEIGEMODUL UND AUSSENRÜCKSPIEGELANORDNUNG**
DRIVING DIRECTION INDICATOR MODULE AND OUTSIDE REAR VIEW MIRROR ASSEMBLY
MODULE DE CLIGNOTANT ET SYSTÈME DE RÉTROVISEUR EXTÉRIEUR

(30) Priorität: 11.07.2014 EP 14176666
(43) Veröffentlichungstag der Anmeldung: 17.05.2017
(73) Patentinhaber: SMR Patents S.à.r.l., 2453 Luxembourg (LU)
(72) Erfinder: ERHART, Volker, 73257 Köngen (DE); FRITZ, Daniel, 70374 Stuttgart (DE)
(74) Vertreter: Weber-Bruls, Dorothée
(86) Internationale Anmeldenummer: PCT/IB2015/054900
(87) Internationale Veröffentlichungsnummer: WO 2016/005854

(56) Entgegenhaltungen:
- EP-A1- 1 854 667
- EP-A1- 2 292 466
- EP-A1- 2 737 990
- EP-A2- 1 391 755
- EP-A2- 2 489 550
- DE-A1-102004 054 732
- DE-A1-102007 010 023
- DE-A1-102008 045 698
- JP-A- 2010 052 444
- JP-A- 2013 179 092
- KR-B1- 100 865 008

## Beschreibung

Die vorliegende Erfindung betrifft ein Fahrtrichtungsanzeigemodul für eine Außenrückblickspiegelanordnung für ein Kraftfahrzeug nach dem Oberbegriff von Anspruch 1.

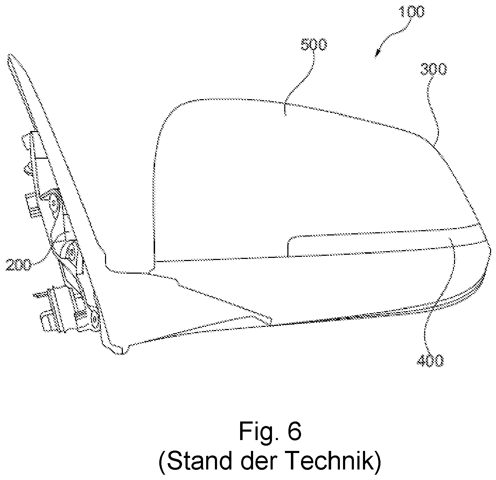

Außenrückblickspiegelanordnungen für Kraftfahrzeuge sind in Stand der Technik vielfältig bekannt. Figur 6 zeigt beispielhaft solch eine Außenrückblickspiegelanordnungen 100, die einen gegenüber einem Spiegelfuß 200 verschwenkbaren Spiegelkopf 300 aufweist. Der Spiegelkopf 300 weist ein Gehäuse 400 auf, das zumindest einen Spiegel (nicht gezeigt) und ein Fahrtrichtungsanzeigemodul 400 trägt.

Aus der EP 0 858 932 B2 ist es für solch eine Außenrückblickspiegelanordnung bekannt, mindestens eine Lichtquelle wenigstens einer Lichtaustrittsöffnung im Gehäuse zuzuordnen und die Lichtaustrittsöffnung mit einem Lichtleiter auszufüllen, der innerhalb des Gehäuses mit der Lichtquelle verbunden ist. Der Lichtleiter kann dabei aus glasklarem Kunststoff besteht und mit seiner Außenseite innerhalb der Außenkontur des Gehäuses liegen.

Es hat sich herausgestellt, dass die Herstellung der Lichtfenster, die als Lichtleiter dienen, wie in der EP 0 858 932 B2 beschrieben, nicht einfach ist. Die Lichtfenster dienen nämlich als Lichtleiter dem Transport von Licht von einer Einkoppelstelle zu einer Vielzahl von im Lichtleiter bereitgestellten Auskoppelstellen, so dass die Leuchtdichte in einem End-Auskoppelbereich bzw. Abstrahlbereich nicht mehr gesetzlichen Bestimmungen genüge leisten kann.

Die Herstellung von Auskoppelstellen ist alternativerweise durch den Einsatz von optischen Folien gelöst worden, siehe die DE 10 2011 103 200 A1.

Bei den gesetzlichen Bestimmungen handelt es sich vor allem um die Regelung Nr. 6 der Wirtschaftskommission der Vereinten Nationen für Europa die ECE R6, d. h., zu einheitlichen Bedingungen für die Genehmigung von Fahrtrichtungsanzeigern für Kraftfahrzeuge und ihre Anhänger.

Ein gattungsgemäßes Fahrtrichtungsanzeigemodul ist aus der EP 1 854 667 A1 bekannt. Dabei kommt eine Leuchteneinheit mit wenigstens zwei Lichtleiterabschnitten zum Einsatz, die an einem Knotenpunkt zusammengeführt sind, der einen Auskoppelbereich bildet, in dem Licht austritt, das in den beiden Lichtleiterabschnitten zum Knotenpunkt geführt ist.

Ein weiteres gattungsgemäßes Fahrtrichtungsanzeigemodul ist in der EP 1 391 755 A2 beschrieben. Ein erster Lichtleiter erstreckt sich von der Außenkante des Gehäuses eines Außenrückspiegels im wesentlichen horizontal zum Kraftfahrzeug und leitet von zumindest einer ersten Lichtquelle an einer zum Fahrzeug hinweisenden Stirnseite eingekoppeltes Licht zu seiner gegenüberliegenden Stirnseite, um es dort gemäß der gesetzlich geforderten Lichtverteilung im Wesentlichen entgegen und quer zur Fahrtrichtung auszukoppeln. Ein zweiter Lichtleiter ist im Wesentlichen hinter dem ersten Lichtleiter angeordnet und koppelt das in ihn von zumindest einen zweiten Lichtquelle an einer zum Fahrzeug hinweisenden Stirnseite eingekoppelte Licht mittels Auskoppelelementen im Wesentlichen quer zu seiner Längserstreckung aus. Das aus dem zweiten Lichtleiter ausgekoppelte Licht durchstrahlt den davon getrennt ausgeformten ersten Lichtleiter.

Die EP 2 489 550 A2 offenbart auch ein gattungsgemäßes Fahrtrichtungsanzeigemodul, und zwar mit einem unitären Lichtführungsglied, das zwei Lichtleiter aufweist, wobei Licht, das von mindestens einer Lichtquelle in das Lichtführungsglied eingekoppelt wird, von einem ersten Lichtleiter mit ersten nach innen reflektierenden Stufen und einen zweiten Lichtleiter mit zweiten nach innen reflektierende Stufen ausgegeben wird. Der erste und zweite Lichtleiter sind so konfiguriert und angeordnet, dass der erste Lichtleiter nicht mit vom zweiten Lichtleiter ausgesandten Licht interferiert und auch der zweite Lichtleiter nicht mit vom ersten Lichtleiter ausgesandten Licht interferiert.

Die JP 2013 179 092 A betrifft eine Fahrzeugleuchte, bei der mehrere Leuchtdioden an einem gemeinsamen Lichtquellenträgerelement befestigt und abgestützt sind, und das Lichtquellenträgerelement an einem Lampenkörper befestigt und abgestützt ist.

Aufgabe der vorliegenden Erfindung ist es, das gattungsgemäße Fahrtrichtungsanzeigemodul derart weiterzuentwickeln, dass es einfach herstellbar ist, und zwar unter Erfüllung sowohl ästhetischer als auch sicherheitstechnischer Anforderungen.

Diese Aufgabe wird erfindungsgemäß gelöst durch die Merkmale des Kennzeichens von Anspruch 1. Bevorzugte Ausführungsformen des erfindungsgemäßen Fahrtrichtungsanzeigemoduls sind in den Ansprüchen 2 bis 6 beschrieben.

Mit der Erfindung wird auch eine Außenrückblickspiegelanordnung für ein Kraftfahrzeug mit einem gegenüber einem Spiegelfuß verschwenkbaren Spiegelkopf geliefert, wobei in dem Gehäuse des Spiegelkopfs zumindest ein Spiegel und ein erfindungsgemäßes Fahrtrichtungsanzeigemodul bereitgestellt sind.

Dabei kann vorgesehen sein, dass das Gehäuse des Spiegelkopfs eine Lichtaustrittsöffnung aufweist, die zumindest durch den ersten Lichtleiter ausgefüllt ist.

Erfindungsgemäß bevorzugt ist, dass das Fahrtrichtungsanzeigemodul mit dem Gehäuse des Spiegelkopfes über jedes Verbindungselement oder jede Verbindungsfläche des Modul-Gehäuses und/oder das Innengehäuse verbunden ist.

Der Erfindung liegt somit die überraschende Erkenntnis zugrunde, dass die beiden Lichtleiter-Funktionen eines Fahrtrichtungsanzeigemoduls, nämlich zum Einen zur Erfüllung von Design-Wünschen und zum Anderen zur Erfüllung einer gesetzlich bestimmten Ausleuchtung, durch zwei Lichtleiter bereitgestellt werden kann, die jedoch in einem ausgeformt sind. Eine erster Lichtleiter stellt dabei einen Design-Lichtleiter mit integrierten, designbedingten Optiken beziehungsweise Auskoppelstellen dar, während ein zweiter Lichtleiter einen Funktionslichtleiter ohne designbedingte Optiken beziehungsweise Auskoppelstellen darstellt. Bevorzugt sind die beiden Lichtleiter auch kombiniert mit einer Lichtscheibe ausgeführt. Die Einheit aus den beiden Lichtleitern ist, insbesondere als ein Ein- oder Zwei-Komponenten-Spritzgußteil, zusammen mit einem Modul-Gehäuse ausgeformt. Über das Modul-Gehäuse kann das Fahrtrichtungsanzeigemodul mit einer Außenrückblickspiegelanordnung und/oder Innengehäuse des Fahrtrichtungsanzeigemodul verbunden werden.

Weitere Merkmale und Vorteile der Erfindung ergeben sich aus der nachfolgenden Beschreibung eines Ausführungsbeispiels unter Bezugnahme auf die nachfolgenden Zeichnungen:
- **Fig. 1**: zeigt eine schematische Ansicht eines erfindungsgemäßen Fahrtrichtungsanzeigemoduls;
- **Fig. 2a und 2b**: zeigt das Fahrtrichtungsanzeigemodul von Figur 1 sowie eine Schnittansicht desselben längs einer Ebene A;
- **Fig. 3a und 3b**: zeigt das Fahrtrichtungsanzeigemodul von Figur 1 sowie eine Schnittansicht desselben längs einer Ebene B;
- **Fig. 4a und 4b**: zeigt das Fahrtrichtungsanzeigemodul von Figur 1 sowie eine Schnittansicht desselben längs einer Ebene C;
- **Fig. 5**: zeigt eine schematische Ansicht zweier Lichtleiter und einer Lichtquelle des Fahrtrichtungsanzeigemoduls von Figur 1; und
- **Fig. 6**: zeigt eine schematische Ansicht einer bekannten Außenrückblickspiegelanordnung für ein Kraftfahrzeug mit einem Fahrtrichtungsanzeigemodul.

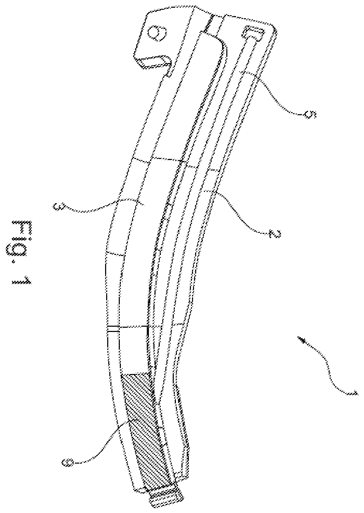

Figur 1 zeigt ein erfindungsgemäßes Fahrtrichtungsanzeigemodul, das häufig auch einfach als Blinkermodul 1 bezeichnet wird. Dieses Blinkermodul 1 umfasst nicht nur ein Modul-Gehäuse oder Gehäuseteil 2 und einen ersten Lichtleiter 3, sondern auch einen zweiten Lichtleiter 5. Der erste Lichtleiter 3 stellt einen Designlichtleiter mit einer Vielzahl von Auskoppelstellen beispielsweise in Form einer Profilierung im Sinne der EP 0 858 932 B2 dar. Licht einer in der Figur 1 nicht gezeigten Lichtquelle, die zumindest eine LED umfasst, gelang an einem in der Figur 1 links gezeigten, ersten Ende in den ersten Lichtleiter 3 und verliert auf seinem Weg zu dem dem ersten Ende gegenüberliegenden zweiten Ende, das in der Figur 1 rechts dargestellt ist, über die Auskoppelstellen an Leuchtdichte, so dass in einem Abstrahlbereich 9 am zweiten Ende des ersten Lichtleiters 3 eine gesetzlich ausreichende Lichtdichte erst durch den zweiten Lichtleiter 5 gewährleistbar ist. Der zweite Lichtleiter 5 wird daher auch als Funktionslichtleiter bezeichnet, wobei er mit Licht aus der Lichtquelle an seinem ersten, links in der Figur 1 dargestellten Ende beaufschlagbar ist, das er im wesentlichen ohne Verluste in den Abstrahlbereich 9 abgibt, so dass der Abstrahlbereich 9 auch tatsächlich der ECE R6 Genüge leistet.

Ein Fahrer eines Fahrzeugs, das mit dem Blinkermodul 1 der Figur 1 ausgerüstet ist, schaut auf das Blinkermodul 1 von links nach rechts. In Blickrichtung des Fahrers verlaufen die beiden Lichtleiter 3 und 5 gemäß Figur 1 zumindest teilweise parallel und übereinander. Die Erfindung ist jedoch hierauf nicht beschränkt, sondern umfasst auch eine zumindest teilweise parallele Anordnung der beiden Lichtleiter nebeneinander. Dabei kann beispielsweise der Lichtleiter 3 in der Blattebene der Figur 1 und der Lichtleiter 5 unterhalb des Blattebene verlaufen.

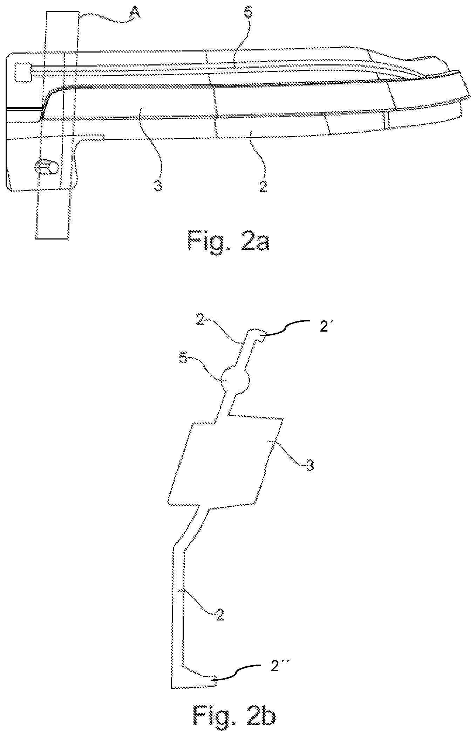

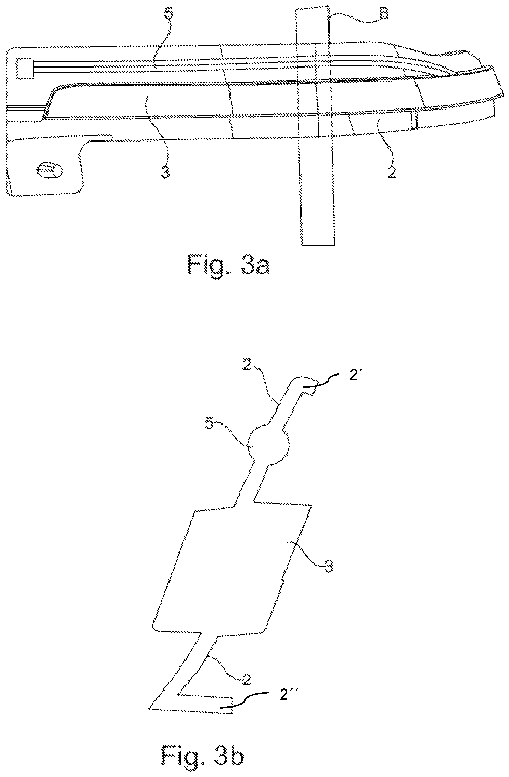

Figuren 2a, 3a und 4a stellen Ansichten gemäß Figur 1 dar, in denen zusätzlich jeweils eine Schnittebene dargestellt ist, und die entsprechenden Schnittansichten finden sich in Figur 2b, 3b beziehungsweise 4b. Anhand dieser Figuren lässt sich der Relativverlauf der beiden Lichtleiter 2, 3 erkennen. Genauer gesagt laufen die beiden Lichtleiter 3, 5 von ihrem jeweiligen ersten Ende 3' beziehungsweise 5' über einen Großteil des Blinkermoduls 1 parallel und lediglich am zweiten Ende 5" des zweiten Lichtleiters 5 nähert sich dieser dem zweiten Ende 3" des ersten Lichtleiters 3, um über einen Spalt 7 Lichtstrahlen 11 in den Abstrahlbereich 9 einzubringen. Alternativerweise kann der zweite Lichtleiter auch direkt in den Abstrahlbereich des ersten Lichtleiters münden.

Den Figuren 2a, 3a und 4b ist desweiteren die Geometrie des Gehäuseteils 2 entnehmbar, das zusammen mit den beiden Lichtleitern 3 und 5 als ein Spritzgußteil ausgeformt ist. Das Gehäuseteil 2 kann dabei an seinen freien, sich gegenüberliegenden Randbereichen 2', 2" mit Verbindungselementen oder Verbindungflächen ausgeformt sein, über die das Blinkermodul 1 mit einem nicht gezeigten Innengehäuse des Blinkermoduls 1 oder aber direkt mit der Außenrückblickspiegelanordnung verbunden werden kann. Dabei können die Verbindungselemente des Blinkermoduls 1 an komplementäre Verbindungselemente der Außenrückblickspiegelanordnung angreifen, oder aber die Verbindungsflächen ermöglichen ein Anschweißen des Gehäuseteils 2 an ein Innengehäuse, das ein weiteres Gehäuseteil darstellt, über das dann eine Anbringung des Blinkermoduls 1 an der restlichen Außenrückblickspiegelanordnung möglich ist.

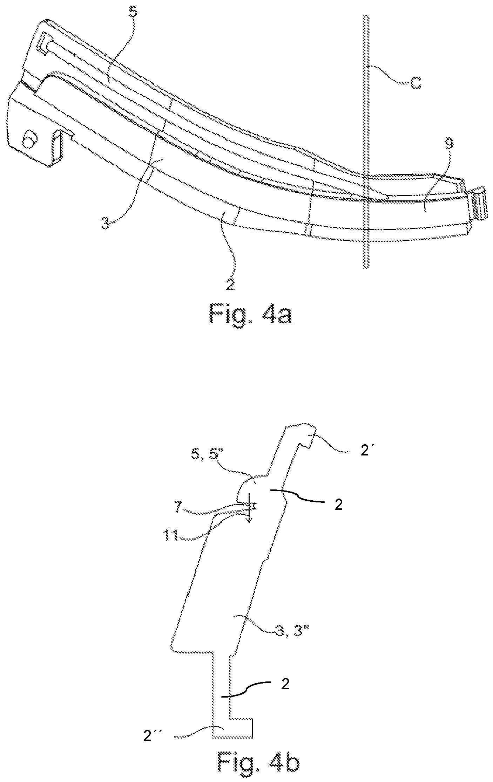

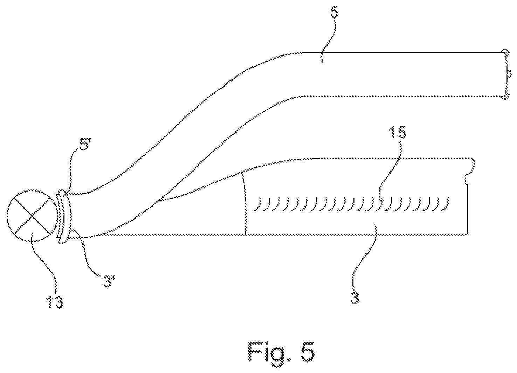

In Figur 5 ist schematisch angedeutet, wie über eine Lichtquelle 13 Licht in das erste Ende 3' des ersten Lichtleiters 3 und in das erste Ende 5' des zweiten Lichtleiters 5 eingekoppelt wird. Dabei sind im ersten Lichtleiter 3 auch Lichtauskoppelstellen 15 angedeutet. Nicht sichtbar in Figur 5 sind die jeweiligen zweiten Enden der beiden Lichtleiter 3, 5, wobei diesbezüglich insbesondere auf die Figuren 4a und 4b verwiesen wird.

Das erfindungsgemäße Blinkermodul 1 kann in üblicher Weise, wie beispielsweise in der EP 0 858 932 B2 beschrieben, in einer Außenrückblickspiegelanordnung (nicht gezeigt) eingebracht werden. Es zeichnet sich durch seine vielfältigen Designmöglichkeiten über den ersten Lichtleiter 3 ohne Einbußen an Leuchtdichte im Abstrahlbereich 9 aufgrund des zweiten Lichtleiters 5, der gemeinsam mit dem ersten Lichtleiter 3 ausgeformt ist, aus.

Die in der voranstehenden Beschreibung und in den anhängenden Ansprüchen sowie Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Fahrtrichtungsanzeigemodul (1) für eine Außenrückblickspiegelanordnung für ein Kraftfahrzeug, mit einer Lichtquelle (13), einem ersten eine Vielzahl von Lichtauskoppelstellen (15) umfassenden Lichtleiter (3) und einem zweiten Lichtleiter (5), **dadurch gekennzeichnet, dass**
die eine Lichtquelle (13) einen ersten Strahlungsteil an einem ersten Ende (3') in den ersten Lichtleiter (3) und einen zweiten Strahlungsteil an einem ersten Ende (5') in den zweiten Lichtleiter (5) einkoppelt, und
die Lichtauskoppelstellen (15) über die gesamte Länge des ersten Lichtleiters (3) zwischen dessen ersten und zweiten Ende (3', 3") verteilt und über Optikelemente bereitgestellt sind,
wobei
ein Modul-Gehäuse (2) gemeinsam mit dem ersten Lichtleiter (3) und dem zweiten Lichtleiter (5), der Licht in einen einzigen Lichtauskoppelbereich abstrahlt, der in einem Bereich des dem ersten Ende (3') des ersten Lichtleiters (3) gegenüber liegenden zweiten Endes (3") des ersten Lichtleiters (3) angeordnet ist, als ein Spritzgußteil ausgeformt ist, wobei
an zumindest einem Randbereich (2', 2") des Modul-Gehäuses (2) mindestens ein Verbindungselement zur Verbindung mit der Außenrückblickspiegelanordnung und/oder einem Innengehäuse des Fahrtrichtungsanzeigemoduls (1) bereitgestellt ist, der zweite Lichtleiter (5) Licht in einen einzigen Lichtauskoppelbereich abstrahlt,
der in einem Bereich des dem ersten Ende (3') des ersten Lichtleiters (3) gegenüber liegenden zweiten Endes (3") des ersten Lichtleiters (3) angeordnet ist, wobei Licht der einen Lichtquelle (13), die zumindest eine LED umfasst, an dem ersten Ende (3') in den ersten Lichtleiter (3) und auf seinem Weg zu dem dem ersten Ende (3') gegenüberliegendem zweiten Ende (3") über die Lichtauskoppelstellen (15) an Lichtdichte verliert, so dass in dem Abstrahlbereich (9) am zweiten Ende (3") des ersten Lichtleiters (3) eine gesetzlich ausreichende Lichtdichte erst durch den zweiten Lichtleiter (5) gewährleistbar ist, und
der erste Lichtleiter (3), der zweite Lichtleiter (5), das Modul-Gehäuse (2) und die Optikelemente gemeinsam ausgeformt sind.

2. Fahrtrichtungsanzeigemodul nach Anspruch 1, **dadurch gekennzeichnet, dass** das mindestens ein Verbindungselement für eine lösbare Verbindung, wie über eine Schnappverbindung, unlösbare bereitgestellt ist.

3. Fahrtrichtungsanzeigemodul nach Ansprüche 1 oder 2, **dadurch gekennzeichnet, dass** die Lichtauskoppelstellen (15) über die gesamte Länge des ersten Lichtleiters (3) zwischen dessen ersten und zweiten Ende (3', 3") gleichmäßig verteilt sind.

4. Fahrtrichtungsanzeigemodul nach einem der vorangehenden Ansprüche, **dadurch gekennzeichnet, dass**
der erste Lichtleiter (3), der zweite Lichtleiter (5), das Modul-Gehäuse (2) und die Optikelemente (15) als ein 2K oder 1K-Spritzgußteil ausgeformt sind.

5. Fahrtrichtungsanzeigemodul nach einem der vorangehenden Ansprüche, **dadurch gekennzeichnet, dass**
das zweite Ende (5") des zweiten Lichtleiters (5) vor oder in dem Lichtauskoppelbereich endet, wobei vorzugsweise ein Spalt (7) zwischen dem zweiten Ende (5") des zweiten Lichtleiters (5) und dem Lichtauskoppelbereich vorgesehen ist.

6. Fahrtrichtungsanzeigemodul nach einem der vorangehenden Ansprüche, **dadurch gekennzeichnet, dass**
der erste und der zweite Lichtleiter (3, 5) zumindest teilweise parallel verlaufen, und/oder
der erste und der zweite Lichtleiter (3, 5) zumindest teilweise relativ zur Blickrichtung eines Fahrers des Kraftfahrzeugs übereinander oder nebeneinander verlaufen.

7. Außenrückblickspiegelanordnung für ein Kraftfahrzeug mit einem gegenüber einem Spiegelfuß verschwenkbaren Spiegelkopf, wobei in dem Gehäuse des Spiegelkopfs zumindest ein Spiegel und ein Fahrtrichtungsanzeigemodul (1) nach einem der vorangehenden Ansprüche bereitgestellt sind.

8. Außenrückblickspiegelanordnung nach Anspruch 7, **dadurch gekennzeichnet, dass** das Gehäuse des Spiegelkopfs eine Lichtaustrittsöffnung aufweist, die zumindest durch den ersten Lichtleiter ausgefüllt ist.

9. Außenrückblickspiegelanordnung nach Anspruch 7 oder 8, **dadurch gekennzeichnet, dass**
das Fahrtrichtungsanzeigemodul (1) mit dem Gehäuse des Spiegelkopfes über jedes Verbindungselement oder jede Verbindungsfläche des Modul-Gehäuses (2) und/oder das Innengehäuse verbunden ist.

## Claims

1. A driving direction indicator module (1) for an outside rear view mirror assembly for a motor vehicle, having a light source (13), a first light guide (3) comprising a plurality of light coupling-out points (15) and a second light guide (5),
**characterized in that** a light source (13) couples in a first radiation part into the first light guide (3) at a first end (3') and a second radiation part into the second light guide (5) at a first end (5'), and the light decoupling points (15) are distributed over the entire length of the first light guide (3) between the first and second ends (3', 3") thereof and are provided via optic elements,
wherein a module casing (2) is formed as an injection-moulded part together with the first light guide (3) and the second light guide (5), the latter radiating light into a single light coupling-out region which is arranged in a region of the second end (3") of the first light guide (3) opposite the first end (3') of the first light guide (3),
wherein at least one connecting element being provided on at least one edge region (2', 2") of the module casing (2) for connection to the outside rear view mirror assembly and/or an inner casing of the driving direction indicator module (1), the second light guide (5) radiating light into a single light coupling-out region which is arranged in a region of the second end (3") of the first light guide (3) opposite the first end (3') of the first light guide (3),
wherein light from the one light source (13), which comprises at least one LED, loses light density at the first end (3') into the first light guide (3) and on its way to the second end (3") opposite the first end (3') via the light coupling-out points (15), so that in the radiation region (9) at the second end (3") of the first light guide (3) a legally sufficient light density is only ensurable by the second light guide (5), and the first light guide (3), the second light guide (5), the module casing(2) and the optical elements are molded together.

2. The driving direction indicator module according to Claim 1, **characterized in that** the at least one connecting element is non-releasably provided for a releasable connection, such as via a snap connection.

3. The driving direction indicator module according to Claim 1 or 2, **characterized in that** the light coupling-out points (15) are uniformly distributed over the entire length of the first light guide (3) between the first and second ends (3', 3") thereof.

4. The driving direction indicator module according to any one of the preceding claims, **characterized in that** the first light guide (3), the second light guide (5), the module casing (2) and the optical elements (15) are formed as a 2K or 1K injection-moulded part.

5. The driving direction indicator module according to any one of the preceding claims, **characterized in that** the second end (5") of the second light guide (5) terminates before or in the light coupling-out region, a gap (7) preferably being provided between the second end (5") of the second light guide (5) and the light coupling-out region.

6. The driving direction indicator module according to any one of the preceding claims, **characterized in that** the first and second light guides (3, 5) run at least partially parallel and/or the first and second light guides (3, 5) run at least partially one above the other or side by side relative to the viewing direction of a driver of the motor vehicle.

7. An outside rear view mirror assembly for a motor vehicle having a mirror head which can be pivoted relative to a mirror foot, at least one mirror and a driving director indicator module (1) being provided in the casing of the mirror head according to any one of the preceding claims

8. The outside rear view mirror assembly according to Claim 7, **characterized in that** the casing of the mirror head has a light exit opening which is filled at least by the first light guide.

9. The outside rear view mirror assembly according to Claim 7 or 8, **characterized in that** the driving direction indicator module (1) is connected to the casing of the mirror head via each connecting element or each connecting surface of the module casing (2) and/or the interior casing.

## Revendications

1. Module indicateur de direction (1) pour un dispositif de rétroviseur extérieur d'un véhicule automobile, avec une source de lumière (13), un premier conduit de lumière (3) comprenant une pluralité de points de sortie de lumière (15) et un deuxième conduit de lumière (5), **caractérisé en ce qu'**une source de lumière (13) injecte une première partie de rayonnement à une première extrémité (3') dans le premier conduit de lumière (3) et une deuxième partie de rayonnement à une première extrémité (5') dans le deuxième conduit de lumière (5), et
les points de sortie de lumière (15) sont répartis sur toute la longueur du premier conduit de lumière (3) entre la première et la deuxième extrémité (3', 3") de celui-ci, et réalisés par des éléments optiques,
un boîtier (2) de module étant formé d'un seul tenant comme pièce moulée par injection avec le premier conduit de lumière (3) et le deuxième conduit de lumière (5), rayonne de la lumière dans une région de sortie de lumière unique disposée dans une région de la deuxième extrémité (3") du premier conduit de lumière (3) opposée à la première extrémité (3') du premier conduit de lumière (3),
au moins un élément de connexion pour raccordement au dispositif de rétroviseur extérieur et/ou un boîtier intérieur du module indicateur de direction (1) étant présenté sur au moins une région de bordure (2', 2") du boîtier (2) de module,
le deuxième conduit de lumière (5) rayonne de la lumière dans une région de sortie de lumière unique, disposée dans une région de la deuxième extrémité (3") du premier conduit de lumière (3) opposée à la première extrémité (3') du premier conduit de lumière (3), la lumière de la une source de lumière (13), laquelle comprend au moins une LED, perdant en densité lumineuse par les points de sortie de lumière (15) à la première extrémité (3') dans le premier conduit de lumière (3) et sur son trajet vers la deuxième extrémité (3") opposée à la première extrémité (3'), si bien qu'une densité lumineuse légalement suffisante ne peut être assurée que par le deuxième conduit de lumière (5) dans la région de rayonnement (9) à la deuxième extrémité (3") du premier conduit de lumière (3), et le premier conduit de lumière (3), le deuxième conduit de lumière (5), le boîtier (2) de module et les éléments optiques sont formés d'un seul tenant.

2. Module indicateur de direction selon la revendication 1, **caractérisé en ce que** ledit au moins un élément de connexion est prévu inamovible pour un raccordement amovible tel qu'un liaison par encliquetage.

3. Module indicateur de direction selon la revendication 1 ou la revendication 2, **caractérisé en ce que**
les points de sortie de lumière (15) sont répartis régulièrement sur toute la longueur du premier conduit de lumière (3) entre la première et la deuxième extrémité (3', 3") de celui-ci.

4. Module indicateur de direction selon l'une des revendications précédentes, **caractérisé en ce que**
le premier conduit de lumière (3), le deuxième conduit de lumière (5), le boîtier (2) de module et les éléments optiques (15) sont formés comme pièce moulée par injection 2K ou 1K.

5. Module indicateur de direction selon l'une des revendications précédentes, **caractérisé en ce que** la deuxième extrémité (5") du deuxième conduit de lumière (5) se termine avant la région de sortie de lumière ou dans celle-ci, une fente (7) étant préférentiellement prévue entre la deuxième extrémité (5") du deuxième conduit de lumière (5) et la région de sortie de lumière.

6. Module indicateur de direction selon l'une des revendications précédentes, **caractérisé en ce que** le premier et le deuxième conduit de lumière (3, 5) se déroulent t au moins en partie parallèlement, et/ou **en ce que** le premier et le deuxième conduit de lumière (3, 5) se déroulent au moins en partie en superposition ou côte à côte par rapport au champ de vision d'un conducteur du véhicule automobile.

7. Dispositif de rétroviseur extérieur d'un véhicule automobile avec une tête de rétroviseur pivotante par rapport à un pied de rétroviseur, au moins un miroir et un module indicateur de direction (1) selon l'une des revendications précédentes étant présentés dans le boîtier de la tête de rétroviseur.

8. Dispositif de rétroviseur extérieur selon la revendication 7, **caractérisé en ce que** le boîtier de la tête de rétroviseur présente une ouverture de sortie de lumière, complétée au moins par le premier conduit de lumière.

9. Dispositif de rétroviseur extérieur selon la revendication 7 ou 8, **caractérisé en ce que** le module indicateur de direction (1) est raccordé de manière amovible au boîtier de la tête de rétroviseur, par chaque élément de connexion ou chaque surface de connexion du boîtier (2) de module et/ou par le boîtier intérieur.
